## Europäisches Patentamt

## European Patent Office

## Office européen des brevets

(11) Publication number: **0 206 050**
**A2**

## (12) EUROPEAN PATENT APPLICATION

(21) Application number: **86107716.2**

(51) Int. Cl.⁴: **G 06 F 12/10**

(22) Date of filing: **06.06.86**

(30) Priority: **28.06.85 US 750385**

(43) Date of publication of application: **30.12.86**
**Bulletin 86/52**

(84) Designated Contracting States: **CH DE FR GB IT LI NL SE**

(71) Applicant: **Hewlett-Packard Company, Mail Stop 20 B-O 3000 Hanover Street, Palo Alto California 94304 (US)**

(72) Inventor: **Bryg, William R., 18630 Perego Way, Saratoga, CA. 95070 (US)**

(74) Representative: **Liesegang, Roland, Dr.-Ing., Sckellstrasse 1, D-8000 München 80 (DE)**

(54) **Virtually addressed cache memory with physical tags.**

(57) A cache memory (21) is accessed in parallel with a translation lookaside buffer (23). The cache memory (21) is accessed with an index including bits from the virtual part as well as from the physical part of the virtual address (43) presented by a processor, and returns a physical tag (49) and a block of data (51). The physical tag (49) is compared with the physical page number (47) returned by the lookaside buffer (23), while the virtual tag (45) returned by the lookaside buffer (23) is compared to the virtual part of the presented virtual address (43). If both are matches, the data returned by the cache memory (21) is the data from the presented address and can be sent to the processor.

Most modern computer systems include a central processing unit (CPU) and a main memory. The speed at which the CPU can decode and execute instructions to process data has for some time exceeded the speed at which instructions and operands can be transferred from main memory to the CPU. In an attempt to reduce the problems caused by this mismatch, many computers include a cache memory or buffer between the CPU and main memory.

Cache memories are small, high-speed buffer memories used to hold temporarily those portions of the contents of main memory which are believed to be currently in use by the CPU. The main purpose of caches is to shorten the time necessary to perform memory accesses, either for data or instruction fetch. The information located in cache memory may be accessed in much less time than that located in main memory. Thus, a CPU with a cache memory needs to spend far less time waiting for instructions and operands to be fetched and/or stored. For example, in typical large, high-speed computers, main memory can be accessed in 300 to 600 nanoseconds; information can be obtained from a cache on the other hand, in 50 to 100 nanoseconds. For such machines the cache memory produces a very substantial increase in execution speed, but the performance is still limited in instruction execution rate by cache memory access time. Additional increases in instruction execution rate can be gained by further decreasing the cache memory access time.

The success of cache memories is based on the assumption that, because a particular memory location has been referenced, that location and locations very close to it are very likely to be accessed in the near future. This is often referred to as the property of locality. The property of locality has two aspects, temporal and spatial. Over short periods of time, a program distributes its memory references nonuniformly over its address space, and the portions of the address space which are favored remain largely the same for long periods of time. This first property, called temporal locality, or locality by time, means that the information which will be in use in the near future is likely to be in use already. This type of behavior can be expected from program loops in which both data and instructions are reused. The second property, locality by space, means that portions of the address space which are in use generally consist of a fairly small number of individually contiguous segments of that address space. Locality by space, then, means that the loci of reference of the program in the near future are likely to be near the current loci of reference. This type of behavior can be expected from common knowledge of programs: related data items (variables, arrays) are usually stored together, and instructions are mostly executed sequentially. Since the cache memory buffers segments of information that have been recently used, the property of locality implies that needed information is also likely to be found in the cache. See, Smith, A. J., Cache Memories, ACM Computing Surveys, 14:3 (Sept. 1982), pp. 473-530.

A cache is made up of many blocks of one or more words of data, each of which has associated with it an address tag that uniquely identifies which block of main memory it is a copy of. Each time the processor makes a memory reference, the cache checks to see if it has a copy of the requested data. If it does, it supplies the data; otherwise, it gets the block from main memory, replacing one of the blocks stored in the cache,    then supplies the data to the processor.

Optimizing the design of a cache memory generally has four aspects:

(1)  Maximizing the probability of finding a memory reference's target in the cache (the hit ratio),

(2)  minimizing the time to access information that is indeed in the cache (access time),

(3)  minimizing the delay due to a miss, and

(4)  minimizing the overheads of updating main memory and maintaining multicache consistency.

All of these objectives are to be accomplished under suitable cost constraints and in view of the interrelationship between the parameters, for example for the trade-off between hit ratio and access time.

It is obvious that the larger the cache, the higher the probability of finding the needed information in it. Cache sizes cannot be expanded without limit, however, for several reasons: cost, the most important reason in many machines, especially small ones; physical size, the cache must fit on the boards and in the cabinets; and access time, the larger the cache, the slower it will become.

Information is generally retrieved from a cache associatively to determine if there is a "hit", and large associative memories are both very expensive and somewhat slow. In early cache memories, all the elements were searched associatively for each request by the CPU. In order to provide the access time required to keep up with the CPU, cache size was limited and the hit ratio was thus rather low.

More recently, cache memories have been organized into groups of smaller associative memories called sets, each containing a number of locations, referred to as the set size. For a cache of size m, divided into L sets, there are s=m/L locations in each set. When an address in main memory is mapped into the cache, it can appear in any of the L sets at the location i mod L. For a cache of a given size, searching each of the sets in parallel can improve access time by a factor of L. However, the time to complete the required associative search is still considerable, especially in virtual memory systems. Thus, the design of a

4

cache architecture must carefully balance hit ratio and access time.

Another complication in cache memory architecture arises in accessing cache memory for systems with virtual memory addresses. The cache can be addressed with physical addresses, but then cache access becomes a two-step process -- first the requested virtual address must be translated into a physical address, then the cache must be searched for the physical address. The translation step is typically done by a translation lookaside buffer (TLB), itself a specialized type of cache for storing recently used virtual address/physical address pairs. Because this cache access process involves two serial search steps, the effect is to increase the cache access time by the length of the TLB access time.

One approach to solving this problem is to access the cache using only the physical offset part of the address presented by the CPU. Since the physical offset is invariant with respect to virtual memory translation, this eliminates the translation delay. However, this approach has the disadvantage of limiting the size of the cache to the size of the physical page times the number of cache sets.

Another proposal is to use a virtually addressed cache. Direct virtual address access is faster since no translation is needed, but causes some problems. The TLB is still necessary to handle translations to real addresses for access to main memory in case of a miss. Also, the tags associated with the data stored in the cache are longer because a virtual tag is needed in addition to the physical tag. Thus more memory hardware is required and the cache is more expensive. If the physical tags are not stored in a virtual accesss cache, inverse mapping (real to virtual address) is sometimes necessary, for instance when two or more virtual addresses map to the same real address and thus share code or data. If a virtual address is a miss in the cache, the address must be translated into a real address to access main memory. Is is then inverse mapped to indicate any other virtual addresses in the cache associated with the real address. If such addresses exist in the cache, they must be renamed and moved to the new virtual address location. Thus, virtual addressed cache memories generally require additional hardware and expense.

An object of the invention is to minimize access time to a cache memory. Minimizing the access time allows the architecture designer greater freedom in choosing a larger cache size in order to increase the hit ratio.

It is also an object of the invention to provide a cache memory capable of being accessed using a combination of bits from the virtual and physical part of the virtual address from the CPU, without waiting for a TLB to translate the virtual address into a physical address.

These and other objects of the invention are accomplished by structuring the cache architecture to enable the cache to be accessed in parallel with access to the TLB rather than serially after the TLB translation has been completed. The cache is accessed by an address which comprises bits from the physical offset and bits from the virtual page number from the virtual address requested by the CPU. The physical page number tags returned from the cache search are then compared with the physical page numbers from the TLB while the virtual address is compared with the virtual tags of the TLB. If both match, then there is a cache hit and that cache set is selected to return the data.

Figure 1 is a schematic block diagram of a computer system constructed in accordance with the invention.

Figure 2 is a schematic illustration of the structure of the cache memory shown in Figure 1.

Figure 3 is a schematic illustration of the structure of the translation lookaside buffer shown in Figure 1.

Figure 4 is a schematic block diagram illustrating the operation of the cache memory and the translation lookaside buffer in retrieving data.

Figure 5 is a schematic block diagram illustrating the operation of a two-set cache memory constructed in accordance with the invention.

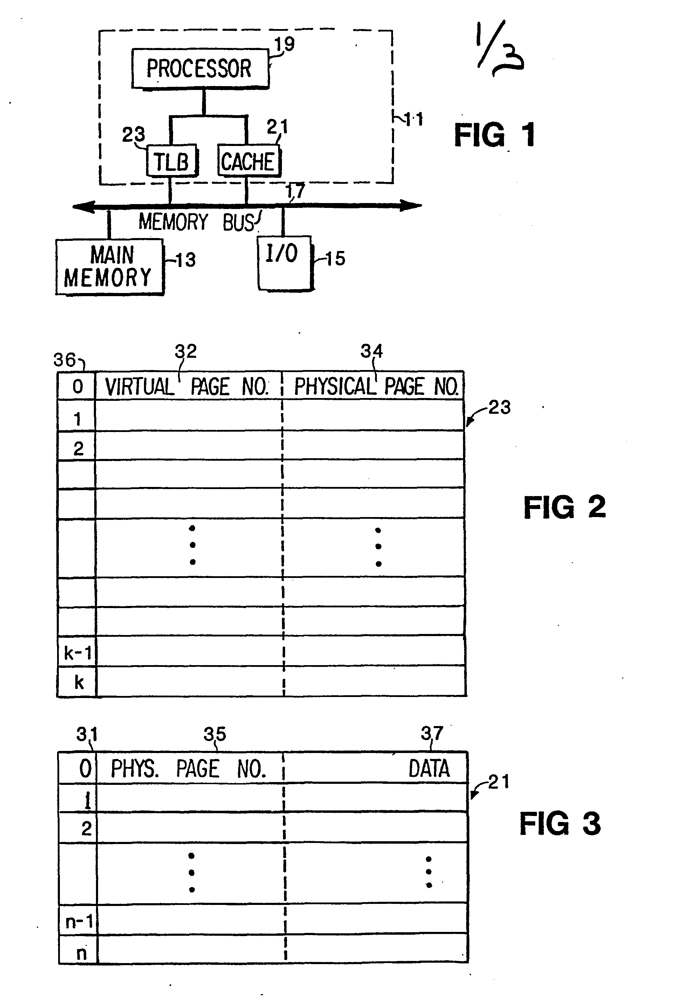

A computer system which includes the preferred embodiment of the cache memory of the invention is illustrated in Figure 1. The CPU 11 communicates with main memory 13 and input/output channel 15 via memory bus 17. The CPU includes a processor 19 which fetches, decodes and executes instructions to process data. It is not practical to store all the instructions and data used by the computer system in the CPU 11. Instead the data and instructions are stored in main memory 13, transferred to processor 19 when they are requested during the execution of a program or routine and returned to main memory 13 after the program or routine has been completed.

Access to main memory 13 is relatively slow compared with the operation of processor 19. If processor 19 had to wait for main memory access to be completed each time an instruction or data was needed, its execution rate would be reduced significantly. In order to provide access times which more closely match the needs of the processor, a buffer memory, cache memory 21, stores a limited number of instructions and data. Since cache 21 is much smaller than main memory 13 it can be economically built to have higher access rates. Nevertheless, there is still a trade off between the access time for the cache and the size of the cache. As discussed above, as the cache becomes larger it becomes more expensive and the access time for the cache increases. Thus, if cache 21 is made very large to increase the hit rate, although there are very few references to main memory, the processor may be slowed down by increased memory access time even for a "hit". It is therefore desirable to decrease the cache access time as much as possible.

The computer system illustrated in Figure 1 uses virtual addresses to access main memory 13. A translator, not shown, converts the virtual addresses to physical addresses necessary to retrieve the required instruction or data. A fast, small memory, the translation lookaside buffer (TLB) 23, stores a limited number of recently used virtual address/physical address pairs returned by the translator. TLB 23 can reduce the access time for main memory by eliminating the translation step for addresses it has stored. If the TLB does not contain the virtual address requested, the translator is invoked and returns the address pair to the TLB which stores it for future use replacing an existing TLB entry.

TLB 23 is also used in accessing cache 21. However, unlike conventional serial cache access systems in which the TLB first translates the virtual address to a real address, then the real address is used to search the cache, the present system is a parallel access system where the TLB translation and the cache search are done simultaneously.

To explain the system of the invention more completely, an understanding of the structure and organization of cache memory 21 and TLB 23 is necessary. The structure of TLB 23 is illustrated in Figure 2 and the structure of cache memory 21 is illustrated in Figure 3.

Referring to Figure 2, TLB 23 comprises an array of locations which hold virtual address/physical address pairs. Each of the locations in labelled with an index 36. Virtual address entries 32 can be the full virtual page number from the virtual address used by processor 19, or alternatively they can be a compressed representation of the virtual page number produced by a hash function. Physical address entries 34 represent the physical page location of the address in main memory, i.e., the translation of the virtual page number. The complete physical address comprises the physical page number and the physical offset, which can be taken directly from the virtual address.

Referring to Figure 3, cache 21 comprises an array of locations which can hold data from main memory 13. Each location is labeled with an index 31 and contains a data entry 33 which includes data 35 and a physical page tag 37. Physical tag 37 corresponds to the physical page number at which the data is stored in main memory.

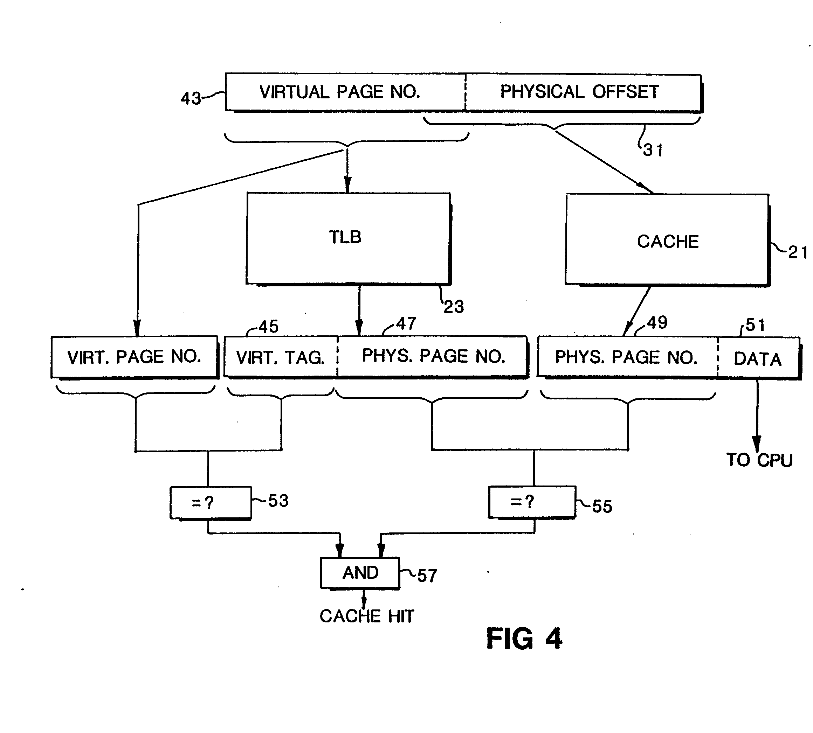

Cache 21 can be considered a virtually addressed cache in that index 31 is not limited in size to number of bits which represents the physical page size. The number of bits in the index 31 is chosen to suit the optimum size for the cache rather than the physical page size, and is larger than the number of bits in the physical offset of the virtual address. Thus, several bits from the virtual part of the address must be used in addition to the physical part to make up the index 31 for the address for mapping the virtual address onto one of the locations in cache 21. However, it is not desirable to use all the bits of the virtual part of the address in index 31 because that would result in an unnecessarily large cache address space. Because index 31 includes only a portion of the virtual page number, a cache search can be done more quickly than for full virtual caches in which the index includes all the bits of the virtual part of the address. There is a trade-off for the abbreviated search time however -- index 31 is not large enough for making an unambiguous search. There is a possibility that the cache search might return a false hit so the cache informaton returned must be checked to be certain it corresponds to the full virtual address requested by processor 19. To resolve this ambiguity, a search of cache 21 and a search of TLB 23 are performed in parallel, as illustrated in Figure 4.

In order to take advantage of virtual/physical indexing, address aliasing -- allowing two different virtual addresses to refer to the same physical address, must be prevented. The reason aliasing causes problems is that

11

cache index 31 which determines where the block of data is put into the cache includes bits from the virtual part of the address. If the same data can be put into the cache with an index using bits of a different virtual address, multiple copies can be created at different locations in the cache and when the cache tries to retrieve the data, it may not find all copies. This can lead to stale data problems. Address aliasing can be prevented by adopting an architecture that maps each virtual address to a distinct physical address, or by the operating system software. The operating system prevents aliasing by flushing suspect data from the cache before that data can be accessed by a second virtual address. For example, if a virtual page is remapped to a different virtual page, the operating system first flushes the addresses involved from the cache using the old virtual addresses to prevent stale data problems.

A search of the cache commences when processor 19 presents a virtual address 43 to be retrieved. Virtual address 43 comprises a virtual page number and a physical offset. The virtual page number goes to TLB 23. Simultaneously, the physical offset and the lower order bits of the virtual page number which comprise the cache index 31 goes to cache 21. The TLB search returns a virtual page number tag 45 and a physical page number 47. The cache search returns a physical page number 49 and data block 51. To complete the search unambiguously, both the TLB return and the cache return must be checked to make sure that they

12

correspond to the requested virtual address. This is done by comparators 53 and 55. Comparator 55 compares the physical page number 47 from TLB 23 with the physical page number 49 from cache 21, while comparator 53 compares the virtual page number tag 45 from TLB 23 with the virtual page number of address 43 requested by processor 19. The output signals from comparators 53 and 55 are sent to and gate 57, and if there is a match in both of these comparisons, there is cache hit and data block 51 is the data requested by processor 19.

If there is no cache hit, the data must be retrieved from main memory 13, either by the physical address returned if there was a TLB hit, or by an address obtained from the translator.

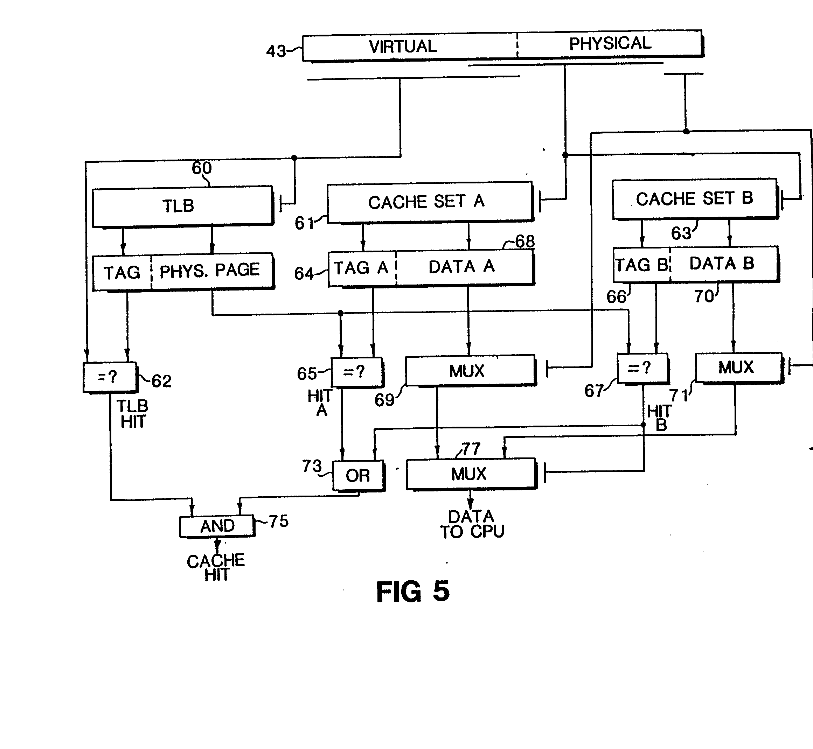

The cache architecture of the invention can also be implemented in a cache memory with more than one set, for example the two-set cache memory illustrated in Figure 5. As in the previous example, the cache search and the TLB search are done simultaneously, and the cache is accessed using a virtual address but checks for a hit using a physical tag. With two sets, the cache search comprises two parallel associative searches and there are two possible returns which must be verified in order to complete an unambiguous search.

The search commences when processor 19 presents a virtual address 43 to be retrieved. The virtual part of the address 43 goes to TLB 60. As in the previous example, TLB

13

60 returns a virtual tag and a physical page number. The virtual tag is sent to comparator 62 for comparison with the virtual part of address 43 to determine if there is a TLB hit. The physical page number is sent to comparators 65 and 67.

The cache index 31 comprising the physical part and the lower order bits of the virtual part of address 43 is sent to cache set A memory 61 and to cache set B memory 63. The cache accesses both memory sets 61 and 63 simultaneously, and this search is done in parallel with the search of TLB 31. Cache set A memory returns a tag 64 which is sent to comparator 65 and a block of data 68 which is sent to multiplexer 69. Cache set B memory returns a tag 66 which is sent to comparator 67 and a block of data 70 which is sent to multiplexer 71. Comparator 65 compares the set A tag 64 with the physical page from the TLB to determine if there is a set A hit, and comparator 67 compares the set B tag 66 to the physical page from the TLB to determine if there is a set B hit. The signals from comparators 65 and 67 are combined at or gate 73 to provide a signal indicating if there is a hit in either cache set, and that signal is combined with the signal from comparator 63 at and gate 75 to provide a signal indicating if there is a valid cache hit.

The lowest order bits of address 43 indicate which of the four words in the stored data block is requested. These bits are sent to multiplexers 69 and 71. Multiplexer 69

14

selects one of the four words in the data block from set A and multiplexer 71 selects one of the four words in the data block from set B. The two selected words are sent to multiplexer 77 which also receives the signal from comparator 67. If comparator 67 indicates a hit in cache set B, multiplexer 77 selects the data word from set B to be sent to the CPU. Otherwise the data word from cache set A is selected.

If and gate 75 indicates a valid cache hit, the data word from multiplexer 77 can be sent to the CPU. If there is no cache hit, the requested data must be retrieved from main memory.

The invention can also be implemented in cache memories with multiple sets and with multiple set TLB's. The additional cache sets are added in parallel. The tag returned from each of the cache sets must be compared with the physical page returned from each of the TLB sets, so the total number of comparisons required is the product of the number of cache sets and the number of TLB sets. For example, a three-set cache with a two-set TLB would need six comparisons to check for a valid cache hit. In adition the final level or gate and the final level multiplexer must be made wider.

Claims                                    _ 16 _

1. A method of retrieving data from a cache memory
   in a computer system comprising a processor,
   a translation lookaside buffer, a main memory
   and a cache memory, and using virtual memory
   addresses, c h a r a c t e r i z e d  by the
   steps of:
   presenting a virtual address from the processor,
   said virtual address comprising a virtual part
   and a physical part;
   accessing the cache memory with an index comprising
   at least one but fewer than all of the bits
   from the virtual part of the virtual address
   and a plurality of bits from the physical part
   of the virtual address, to provide an output
   from the cache including a physical tag and
   a block of data;
   accessing the translation lookaside buffer in
   parallel with accessing the cache memory, using
   a plurality of bits from the virtual part of
   the virtual address, to provide an output from
   the translation lookaside buffer including a
   virtual tag and a physical page number;
   comparing the virtual tag with the virtual part
   of the virtual address and providing a first
   signal of the virtual tag matches the virtual
   part;
   comparing the physical tag with the physical
   page number from the translation lookaside buffer,
   and providing a second signal if the physical
   tag matches the physical page number;
   making available to the processor at least a
   portion of the block of data output from the
   cache; and
   providing a signal to the processor indicating
   that the data made available is the data from
   the virtual address presented by the processor
   if both the first signal and the second signal
   are present.

- 17 -

2. A hierarchical memory system for a computer using virtual memory addresses c h a r a c t e- r i z e d by

processor means (19) for presenting a virtual address, said virtual address comprising a virtual part and a physical part;

memory means (13) for storing data at physical addresses;

a cache memory (21;61,63) connected between the processor (19) and the memory (13), for storing selected blocks of data from the memory (13), capable of being accessed in response to a virtual address (43) presented by the processor (19) using an index comprising at least one but fewer than all of the bits from the virtual part of the virtual address (43) and a plurality of bits from the physical part of the virtual address (43), to provide an output from the cache memory (21;61,63) including a physical tag (64) and a block of data (68);

a translation lookaside buffer (23;60) connected between the processor (19) and the memory (13) in parallel with the cache memory (21;61,63), for storing selected pairs of virtual addresses and corresponding physical addresses, capable of being accessed in parallel with access to the cache memory (21;61,63) using a plurality of bits from the virtual part of the virtual address (43), to provide an output from the translation lookaside buffer (23;60) including a virtual tag and a physical page number;

a first comparator (53;62) responsive to the virtual tag from the translation lookaside buffer (23;60) and to the virtual part of the virtual address (43) presented by the processor (19) to provide a first signal if the virtual tag matches the virtual part of the virtual address (43);

a second comparator (55;65) responsive to the physical tag (64) from the cache memory (21;61,63) and to the physical page number from the translation lookaside buffer (23;60) to provide a second signal if the physical tag matches the physical page number;

means (69,71) for making available to the processor at least a portion of the block of data (68) output from the cache memory (61,63); and

means (57;75) responsive to the first and second signals for providing a third signal to the processor indicating that the data made available is the data from the virtual address presented by the processor (19) if both the first signal and the second signal are present.

FIG 1

FIG 2

FIG 3

FIG 4

**FIG 5**